# EUROPÄISCHE PATENTSCHRIFT

(11) **EP 3 390 038 B1**
(45) Veröffentlichungstag und Bekanntmachung des Hinweises auf die Patenterteilung: **11.11.2020**
(21) Anmeldenummer: 16802075.8
(22) Anmeldetag: 29.11.2016
(51) Int. Cl.: B32B 5/22, B32B 5/24, B32B 5/26, B32B 37/15, B32B 38/08, C08G 69/20, C08J 5/24, C08L 77/02, C08G 69/24, C08J 5/04, B32B 3/08

(54) **HERSTELLUNG VON FASERVERBUNDWERKSTOFFEN**
PREPARATION OF FIBRE COMPOSITE MATERIALS
FABRICATION DE MATIERES COMPOSITES FIBREUSES

(30) Priorität: 18.12.2015 EP 15201334; 29.08.2016 EP 16186129
(43) Veröffentlichungstag der Anmeldung: 24.10.2018
(73) Patentinhaber: Lanxess Deutschland GmbH, 50569 Köln (DE)
(72) Erfinder: FUCHS, Dominic, 50733 Köln (DE); WITT, Michael, 95488 Eckersdorf (DE); KNAUP, Jürgen, 50829 Köln (DE)
(86) Internationale Anmeldenummer: PCT/EP2016/079133
(87) Internationale Veröffentlichungsnummer: WO 2017/102310

(56) Entgegenhaltungen:
- EP-A2- 0 791 618
- WO-A1-2013/004645
- WO-A1-2013/174943
- WO-A2-2014/086757

## Beschreibung

Die Erfindung betrifft ein Verfahren zur Herstellung von Faserverbundwerkstoffen durch spezielle Auftragung von Monomermischungen auf eine Faseroberfläche und anschließender Polymerisierung.

### Stand der Technik

Endlosfaser verstärkte thermoplastische Verbundwerkstoffe bieten die Möglichkeit, metallische Werkstoffe zu ersetzten und, insbesondere im Automobilbau oder auch bei Anwendungen im Bereich der Consumer Electronics (CES), nachhaltigen, wirtschaftlichen Leichtbau zu realisieren.

Thermoplastische Verbundwerkstoffe werden durch Erwärmen verformbar. Damit ist es möglich, kostengünstig aus flächigen Halbzeugen, den sogenannten Composite Sheets oder Organoblechen, komplexe Composite-Hybrid Bauteile nacharbeitsfrei und in großsereintauglicher Zykluszeit herzustellen.

Im Sinne der Erfindung sind "Halbzeuge" oder "Organobleche" imprägnierte und konsolidierte faserverstärkte Verbundwerkstoffe, die thermisch nachverformbar sind.

Die besonderen Werkstoffeigenschaften von Composite Sheets basieren auf einer vollständigen Umhüllung jeder Einzelfaser mit der thermoplastischen Matrix. Die Imprägnierung des Faserhalbzeugs mit Polyamid 6 (PA 6) erfolgt heute vorzugsweise auf beheizten Doppelbandpressen. Das Polymer wird hierzu bis in den schmelzflüssigen Zustand erwärmt und unter hohen Druck in das trockene Faserhalbzeug eingebracht. Nachteilig sind dabei die hohen Schmelzviskosität von geschmolzenem PA 6, da sie abhängig vom zu tränkenden Fasermaterial die Prozessgeschwindigkeit begrenzen.

EP 791618A2 beschreibt ein alternatives Verfahren zur Tränkung trockener Verstärkungsfasergebilde mit einer aktivierten Lactamschmelze und anschließender Polymerisation zum PA 6. In diesem Fall erfordert die Imprägnierung aufgrund der niedrigviskosen Monomerschmelze deutlich geringere Pressdrücke und Presszeiten. Das Lactam wird dabei im geschmolzenen Zustand mit dem Aktivator und dem Katalysator und optionalen Additiven vermischt und diese aktivierte Schmelze nachfolgend mit dem Verstärkungsfasergebilde in Kontakt gebracht, selbiges getränkt und das monomere Lactam dann zur Matrix des Verbundkunststoffes in-situ polymerisiert.

Die EP 791618A2 beschreibt allerdings nicht, wie die aktivierte Schmelze dosiert wird, wie die aktivierte Schmelze auf das Verstärkungsfasergebilde aufgebracht wird und in welcher Art und Weise eine Imprägnierung und Konsolidierung zu einem Verbundwerkstoff erfolgt. Ein grundsätzlicher Nachteil an diesem Verfahren besteht darin, dass nach Bereitung der aktivierten Caprolactamschmelze diese aufgrund der Polymerisationsneigung bei Temperaturen oberhalb des Caprolactam-Schmelzpunktes leicht polymerisiert und die gebildeten Polymerisate in den zuführenden Leitungen Probleme verursachen.

So werden bei einem kontinuierlichen Betrieb über längere Zeiträume am Mischorgan, an den zuführenden Leitungen zum eigentlichen Auftragsorgan und am Auftragsorgan selber Wandbelege bzw. Verstopfungen durch Polymerisation verursacht. Bei großtechnischen Produktionsanlagen führt dies zu unerwünschten Störungen wie Produktionsausfällen.

In WO2013/174943 werden faserverstärkte Polyamide im sogenannten Zwei-Topf-Verfahren umgesetzt, wobei Mischungen aus Katalystor und Lactam sowie Aktivator und Lactam in Form von flüssigen Schmelzen zunächst getrennt voneinander hergestellt, dann miteinander vermischt und anschließend in einer Gußform in Gegenwart von Verstärkungsfasern polymerisiert werden.

Ein ganz anderes Konzept, welches aber ebenfalls auf einer direkten Polymerisation einer aktivierten Caprolactamschmelze basiert, beschreibt die WO 2014086757.

Hier wird eine zur Polymerisation befähigte, schon aktivierte Caprolactamschmelze durch erneutes Abkühlen zunächst in den festen, Pulver-förmigen Zustand überführt.

Das Pulver enthält folglich bereits Aktivator, Katalysator und ggf. Additive und wird direkt auf dem flächigen Verstärkungsfasergebilde abgelegt. Durch eine sich anschließende Behandlung unter erhöhtem Druck und bei einer Temperatur, bei der die Mischung aus den Komponenten fließfähig wird, wird das Fasermaterial zunächst getränkt und dann polymerisiert.

Nachteil ist hier, dass diese feste, polymerisierbare Zusammensetzung zuvor in einem aufwendigen Prozess hergestellt werden muss. Eine Möglichkeit zur Herstellung solch einer geeigneten pulver-förmigen Zusammensetzung beschreibt die EP2012062792, bei der eine aktivierte Lactamschmelze über eine Düse in einen Sprühturm eingetragen wird, dort mittels Inertgas abkühlt wird und so erstarrt.

Diese Verfahren sind allerdings durch einen solchen zusätzlichen Verfahrensschritt aufwendig und aus energetischer Sicht unvorteilhaft, da die Lactamschmelze mehrmals hintereinander aufgeschmolzen und durch Abkühlung wieder in den festen Zustand überführt werden muss.

Konkret erfolgt das Einmischen im aufgeschmolzenen Zustand, die Schmelze wird dann abgekühlt und zu Partikeln geeigneter Größe aufbereitet, welche dann zur eigentlichen Tränkung bzw. Imprägnierung des Verstärkungsfasergebildes erneut wieder aufgeschmolzen werden müssen.

Aufgabe war es ein Verfahren zur Herstellung von Faserverbundstoffen zu finden, das einerseits gute Verbundwerkstoffe liefert und andererseits die Nachteile des Standes der Technik überwindet, insbesondere unnötige alternierende Aufschmelz- und Erstarrungsvorgänge vermeidet und darüber hinaus vorzugsweise einen störungsfreien Betrieb in technischen Großanlagen ermöglicht, ohne das Rohrleitungen, Mischer oder Auftragsorgane durch lokal gebildete Polymerverunreinigungen verstopfen oder durch die Bildung von Wandbelägen in ihrer Funktion beeinträchtigt werden.

Es wurde überraschend ein Verfahren zur Herstellung eines Faserverbundwerkstoffes gefunden, wobei man: gemäss Anspruch 1
a) auf die Oberfläche eines Fasermaterials
   a1) eine bei der Auftragungstemperatur flüssige Monomerenmischung, enthaltend ein zyklisches Amid gemäss Anspruch 1 und einen Aktivator gemäss Anspruch 1 und
   a2) eine bei der Auftragungstemperatur flüssige Monomerenmischung, enthaltend ein zyklisches Amid gemäss Anspruch 1 und einen Katalysator gemäss Anspruch 1 mit einer Temperatur oberhalb der Schmelztemperatur mittels einer Dreistoffdüse aufträgt und
b) die nach Schritt a) aufgetragenen Monomerenmischungen bei einer Temperatur von 120 bis 300 °C polymerisiert,
   dadurch gekennzeichnet, dass die mittlere Tropfengröße der jeweiligen Monomermischungen a1) und a2) kleiner 500µm, besonders kleiner 200µm ist, insbesondere im Größenbereich zwischen 10 bis 100 µm liegt.

Die beiden Monomerenmischungen sind selbstverständlich voneinander verschieden. In einer bevorzugten Ausführungsform beträgt die maximale Menge an Katalysator in der Monomerenmischung a1) kleiner 0,1 Gew. %, insbesondere kleiner 0,01 Gew.%, bezogen auf die Mischung und die maximale Menge an Aktivator in der Monomerenmischung a2) kleiner 0,1 Gew. %, insbesondere kleiner 0,01 Gew.%, bezogen auf die Mischung.

Die Auftragung der Mischungen a1) und a2) kann dabei nacheinander oder gleichzeitig erfolgen. Die Schmelztemperatur der jeweiligen Monomerenmischung a1) bzw. a2) wird dabei unter Normaldruck verstanden.

### Fasermaterial

Der im Rahmen der vorliegenden Anmeldung verwendete Begriff "Fasermaterial" bedeutet vorzugsweise ein Material, das als Faserhalbzeug vorliegt und vorzugsweise ausgewählt wird aus der Gruppe Gewebe, Gelege einschließlich Multiaxialgelege, Gesticke, Geflechte, Vliese, Filze, und Matten oder ein Gemisch oder Kombinationen aus zwei oder mehreren dieser genannten Faserhalbzeuge.

Zur Herstellung von Faserhalbzeugen sind die zu verwendenden Fasern in der Weise miteinander verbunden, dass zumindest eine Faser oder ein Faserstrang mindestens eine andere Faser oder einen anderen Faserstrang berührt, um ein kontinuierliches Material zu bilden. Oder aber, die zur Herstellung von Faserhalbzeugen verwendeten Fasern berühren einander in der Weise, dass eine kontinuierliche Matte, Gewebe, Textil oder ähnliche Struktur gebildet wird;
Der Begriff "Flächengewicht" bezeichnet die Masse eines Materials in Abhängigkeit von der Fläche und bezieht sich im Rahmen der vorliegenden Erfindung auf die trockene Faserschicht. Das Flächengewicht wir nach DIN EN ISO 12127 bestimmt.

Die vorstehend benannten textilen Faserstrukturen können ein- oder mehrlagig sowie in unter-schiedlicher Kombination bezüglich textiler Flächengebilde, Faserarten und deren Fasermengen für die Bauteilherstellung verwendet werden. Bevorzugt werden Gelege, Multiaxial-Gelege, (Multiaxial-) Geflechte oder Gewebe eingesetzt, die aus zwei oder mehr als zwei, vorzugsweise 2 bis 10 Lagen bestehen.

Die eingesetzten Fasermaterialien enthalten als Fasern vorzugsweise solche aus anorganischen Mineralien wie Kohlenstoff, beispielsweise als Niedermodulcarbonfasern oder Hochmodulcarbon-fasern, silikatische und nicht silikatische Gläser der verschiedensten Art, Bor, Siliciumcarbid, Metalle, Metalllegierungen, Metalloxide, Metallnitride, Metallcarbide und Silikate, sowie organische Materialien wie natürliche und synthetische Polymere, beispielsweise Polyacrylnitrile, Polyester, Polyamide, Polyimide, Aramide, Flüssigkristallpolymere, Polyphenylensulfide, Polyetherketone, Polyetheretherketone, Polyetherimide, Baumwolle, Cellulose und andere Naturfasern, beispielsweise Flachs, Sisal, Kenaf, Hanf, Abaca. Bevorzugt sind hochschmelzende Materialien, beispielsweise Gläser, Kohlenstoff, Aramide, Kaliumtitanat, Flüssigkristallpolymere, Polyphenylensulfide, Polyether-ketone, Polyetheretherketone und Polyetherimide, besonders bevorzugt sind Glasfasern, Kohlen-stofffasern, Aramidfasern, Stahlfasern, Keramikfasern und/oder sonstige hinreichend temperaturbeständige polymere Fasern oder Fäden.

Vorzugsweise werden Fasermaterialien aus Glasfasern und/oder Kohlenstofffasern eingesetzt, besonders bevorzugt aus Glasfasern.

Vorzugsweise ist das Fasermaterial aus Kohlenstofffasern ein Gewebe mit einem Flächengewicht von größer als 100 g/m².

Vorzugsweise ist das Fasermaterial aus Glasfasern ein Gewebe. Vorzugsweise hat das Fasermaterial aus Glasfasern ein Flächengewicht größer oder gleich 200 g / m², besonders bevorzugt größer als oder gleich 250 g / m². In einer bevorzugten Ausführungsform der Erfindung werden Kombinationen von Fasermaterial aus Kohlenstofffasern und Fasermaterial aus Glasfasern eingesetzt. Bevorzugt sind Fasermaterialkombinationen bzw. Faserhalbzeuge enthaltend in den Außenlagen Kohlenstofffasern und in wenigstens einer Innenlage Glasfasern.

Vorzugsweise liegt der Gehalt an Fasermaterialien im erfindungsgemäß herzustellenden Faserverbundwerkstoff im Bereich von 20 bis 75 Volumenprozent, besonders bevorzugt im Bereich von 40 bis 65 Gewichtsprozent.

Das erfindungsgemäße Verfahren ermöglicht eine sehr gute Imprägnierung der Verstärkungsfasern bei wirtschaftlich akzeptablen Polymerisationszeiten und die Bildung von Produkten mit guten mechanischen Eigenschaften.

"Imprägniert" bedeutet im Sinne der vorliegenden Erfindung, dass die Monomerenmischungen a1) und a2) jeweils in die Vertiefungen und Hohlräume des Fasermaterials bzw. Faserhalbzeugs eindringt und das Fasermaterial benetzt. Mit Hilfe des erfindungsgemäßen Verfahrens ist es möglich, Faserverbundwerkstoffe mit einem hohen Faseranteil herzustellen.

### Trocknung/Vorbehandlung des Fasermaterials

Das eingesetzte Fasermaterial hat vorzugsweise eine Restfeuchte von weniger als 5 Gew.-%, vorzugsweise weniger als 1 Gew.-% und insbesondere weniger als 0.1 Gew.%.

Um dies sicherzustellen, wird das eingesetzte Fasermaterial vorzugsweise vor dem Auftragen der Monomerenmischungen a1) und a2) mit Heißluft, vorzugsweise mit einer Temperatur von 60 bis 200°C, insbesondere von 100 bis 170°C behandelt. Der Taupunkt der Heißluft liegt dabei bevorzugt unter 0°C , insbesondere unter -18°C und ganz besonders bevorzugt unter -30°C.

Besonders bevorzugt erfolgt die Heißluftbehandlung zweistufig, wobei in einer ersten Stufe das Fasermaterial im Abluftverfahren mit Heißluft behandelt, insbesondere durchströmt wird. In einer bevorzugt räumlich nachgelagerten zweiten Stufe erfolgt die Heißluftbehandlung vorzugsweise im Umluftverfahren, bei der die Heißluft über eine Absorbertechnik oder durch physikalische Maßnahmen wie dem Ausfrieren von Feuchtigkeit auf einen konstanten, niedrigen Feuchtegehalt gehalten wird.

Die im Abluftbetrieb vorgeschaltete optionale erste Stufe verhindert, dass mehr Feuchtigkeit in die zweite Stufe eingetragen wird, als diese beispielsweise im kontinuierlichen Betrieb entfernen kann.

In beiden Stufen werden vorzugsweise perforierte Bodenmaterialien, insbesondere Bodenbleche als Unterlage oder im bevorzugten Fall eines kontinuierlichen Verfahrens zum Transport des Fasermaterials durch die einzelnen Stufen verwendet. In diesem Fall wird die Heißluft bevorzugt durch diese perforierten Unterlagen Fasermaterials geleitet. Es ist besonders bevorzugt in der ersten Stufe nach dem Abluftverfahren das Fasermaterial auf eine Restfeuchte von kleiner 0.5 Gew.-% zu trocknen.

### a1)

Als zyklisches Amid der Komponente a1) wird ein Amid der allgemeinen Formel (I) eingesetzt, 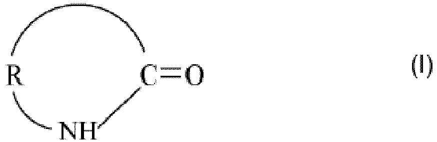 wobei sich insbesondere ε-Caprolactam, lactam oder deren Mischungen. eignen. Besonders bevorzugt wird als Lactam ausschließlich Caprolactam oder ausschließlich Lauryllactam eingesetzt.

Im Rahmen der vorliegenden Erfindung wird unter Aktivator vorzugsweise ein Aktivator für die anionische Polymerisation verstanden, vorzugsweise ein durch elektrophile Reste N-substituiertes Lactam (z.B. ein Acyllactam) oder Vorstufen für solche aktivierten N-substituierten Lactame, welche zusammen mit dem cyclischen Amid in-situ ein aktiviertes Lactam bilden.

Als Aktivator dienen Verbindungen ausgewählt aus der Gruppe der Isocyanate, Uretdione, Carbodiimide, Säureanhydride oder Säurehalogenide bzw. deren Umsetzungsprodukte mit dem Monomer.

Als Aktivator der Komponente a1) eignen sich insbesondere aliphatische Diisocyanate, wie Butylen- diisocyanat, Hexamethylendiisocyanat, Octamethylendiisocyanat, Decamethylendiisocyanat, Undecamethylendiisocyanat, Dodecamethylendiisocyanat, 4,4'-Methylenbis(cyclohexylisocyanat), Isophorondiisocyanat, aromatische Diisocyanate, wie Toluyidiisocyanat, 4,4'-Methylenbis(phenyl)-isocyanat oder Polyisocyanate (z.B. Isocyanate von Hexamethylendiisocyanat), Allophanate (z.B. Ethylallophanat). Insbesondere können Mischungen der genannten Verbindungen als Aktivator der Komponente a1) eingesetzt werden.

Als Aktivatoren eignen sich weiterhin aliphatische Disäurehalogenide, wie Butylendisäurechlorid, Butylendisäurebromid, Hexamethylendisäurechlorid, Hexamethylendisäurebromid, Octamethylen-disäurechlorid, Octamethylendisäurebromid, Decamethylendisäurechlorid, Decamethylendi-säurebromid, Dodecamethylendisäurechlorid, Dodecamethylendisäurebromid, 4,4'-Methylenbis-(cyclohexylsäurechlorid), 4,4'-Methylenbis(cyclohexylsäurebromid), Isophoron-disäurechlorid, Isophorondisäurebromid als auch aromatische Disäurehalogenide, wie Toluylmethylendisäurechlorid, Toluylmethylendisäurechlorid, 4,4'-Methylenbis(phenyl)säurechlorid, 4,4'-Methylenbis-(phenyl)-säurebromid. Insbesondere können Mischungen der genannten Verbindungen als Aktivator der Komponente a1) eingesetzt werden.

Insbesondere bevorzugt ist als Aktivator der Komponente a1) mindestens eine Verbindung, ausgewählt aus der Gruppe bestehend aus aliphatischen Polyisocyanaten, insbesondere Diisocyanaten, aromatischen Polyisocyanaten, insbesondere Diisocyanaten, aliphatischen Disäurehalogeniden und aromatischen Disäurehalogeniden. Bevorzugt werden die Polyisocyanate, insbesondere aliphatische Polyisocyanate, als geblockte Isocyanate eingesetzt.

In einer bevorzugten Ausführungsform wird als Aktivator der Komponente a1) mindestens eine Verbindung eingesetzt, die ausgewählt ist aus der Gruppe Hexamethylendiisocyanat, Isophorondiiso- cyanat, Hexamethylendisäurebromid, Hexamethylendisäurechlorid und deren Mischungen. Besonders bevorzugt wird Hexamethylendiisocyanat als Aktivator der Komponente a1) eingesetzt, insbesondere als geblocktes Isocyanat. Geeignet als Aktivator ist beispielsweise ein Caprolactam-blockiertes 1,6-Hexamethylendiisocyanat. Eine Lösung eines Caprolactam-blockierten 1,6-Hexa-methylendiisocyanats in Caprolactam - also eine Mischung der Komponente a1) ist kommerziell unter der Bezeichnung Brueggolen® C20 von der Firma Brueggemann oder Addonyl® 8120 der Firma Rhein Chemie Rheinau GmbH erhältlich.

Das Molverhältnis von Monomer, insbesondere von zyklischem Lactam zu Aktivator kann in weiten Grenzen variiert werden und beträgt in der Regel 1 : 1 bis 10000 : 1, bevorzugt 5 : 1 bis 2000 : 1, besonders bevorzugt 20 : 1 bis 1000 : 1.

Bevorzugt enthält die Monomerenmischung a1) 90 bis 99 Gew.-% zyklisches Amid und 1 bis 10 Gew.-% Aktivator.

### a2)

Als zyklisches Amid der Komponente a2) wird vorzugsweise das gleiche zyklische Amid wie das der Komponente a1) eingesetzt, insbesondere ebenfalls ein zyklisches Amid der allgemeinen Formel (I), ausgewählt aus Caprolactam, Lauryllactam oder deren Mischungen.

Der Katalysator ist ein gängiger Katalysator für die anionische Polymerisation. Unter einem Katalysator für die anionische Polymerisation wird im Rahmen der vorliegenden Erfindung vorzugsweise eine Verbindung verstanden, welche die Bildung von Lactam-Anionen ermöglicht.

Der Katalysator der Komponente a2) zur Polymerisation des zyklischen Amids ist vorzugsweise ein üblicher Katalysator für anionische Polymerisation, er wird ausgewählt aus der Gruppe, bestehend aus Natriumcaprolactamat, Kaliumcaprolactamat, Bromid-Magnesiumcaprolactamat, Chlorid-Magnesium-capro lactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kalium-butanolat, bevorzugt aus der Gruppe bestehend aus Natriumhydrid, Natrium und Natriumcapro-lactamat, besonders bevorzugt Natriumcaprolactamat.

Als Monomerenmischung der Komponente a2) enthaltend einen Katalysator kann auch eine Lösung von Natriumcaprolactamat in Caprolactam eingesetzt werden, z.B. Brüggolen® C10 der Firma Brüggemann, das 17 bis 19 Gew.-% Natriumcaprolactamat in Caprolactam enthält bzw. Addonyl® Kat NL der Firma Rhein Chemie Rheinau GmbH, das 18 Gew.-% Natriumcaprolactamat in Caprolactam enthält.

Das Molverhältnis von zyklischem Amid zu Katalysator kann in weiten Grenzen variiert werden, es beträgt in der Regel 1 : 1 bis 10000 : 1, bevorzugt 5 : 1 bis 1000 : 1, besonders bevorzugt 1: 1 bis 500: 1.

Bevorzugt enthält die Monomerenmischung a2) 80 bis 99 Gew.-% zyklisches Amid und 1 bis 20 Gew.-% Katalysator. Besonders bevorzugt enthält die Monomerenmischung a2) mehr als 96 Gew-%, an zyklischem Amid und weniger als 4 Gew. Katalysator.

### Auftragung

Die beiden Monomerenmischungen a1) und a2) werden vorzugsweise bei einer Temperatur von bis zu 140 °C, vorzugsweise bis zu 100 °C oberhalb der Schmelztemperatur auf das Fasermaterial aufgetragen. Die Auftragung erfolgt dabei in einer Gesamtmenge der Mischungen a1) und a2) vorzugsweise von 10 bis 100 g pro 100 g Flächengewicht , insbesondere von 30 bis 50 g pro 100 g Flächengewicht des Fasermaterials.

Zur Erreichung der gewünschten Teilchengröße kommen Dreistoffdüsen in Frage. So können die beiden Mischungen a1) und a2) jeweils gleichzeitig oder nacheinander, vorzugsweise jedoch gleichzeitig, insbesondere bei gleichen Volumenanteilen von a1) und a2) auf das Faser-material aufgetragen werden. Als Austragsorgan kommen dabei Dreistoffdüsen in Frage.

Die Zuführung zu einem Austragsorgan erfolgt vorzugsweise mittels einer Pumpe, vorzugsweise einer Verdrängerpumpe, Zahnradpumpe oder Kolbendosierpumpe, durch temperierte Leitungen vorzugsweise volumenstromgeregelt mit einer Temperatur von vorzugsweise T = 100 - 180°C zu dem Austragsorgan gefördert, wobei die beiden Behälter, enthalten die jeweiligen Monomeren-mischungen a1) und a2), jeweils mit einer solchen Fördereinrichtung ausgestattet sind. Die Dosierpumpen haben im Falle der Inertgas induzierten Zertropfung nur die Aufgabe, definierte Volumenströme der Komponenten a1) und a2) den oder der Düse zuzuführen.

Das Verhältnis der dosierten Volumenströme der Komponenten a1) und a2) beträgt bevorzugt 4 bis 0.25, besonders bevorzugt 1.1 bis 0.9.

Besonders bewährt hat die Verwendung einer Mehrstoffdüse, insbesondere Dreistoffdüse.

Über die Dreistoffdüse werden zwei Schmelzeströme der Komponenten a1) und a2) mittels eines Inertgasstroms, vorzugsweise eines Stickstoffstroms, ausgetragen und zertropft. Das Inertgas wird vorzugsweise mit einer Temperatur von T = 140 - 160°C der Mehrstoffdüse zugeführt.

Die Vorteile bei Verwendung einer Mehrstoffdüse, insbesondere einer Dreistoffdüse liegen weiterhin darin, dass sie ausreichend kleine Tropfen der ausgetragenen Schmelzen der Komponente a1) und a2) bilden können. Dabei liefert das aus der Düse austretende Inertgas, vorzugsweise Stickstoff, die kinetische Energie zur Erzeugung entsprechend kleiner Tropfen. Die Tropfengröße lässt sich dabei vorzugsweise mit Laserbeugungsspektrometern messen, Um die Tropfen in möglichst geeigneter Weise auf das Fasermaterial aufzubringen, kann die Flug-bahn und Geschwindigkeit beispielsweise durch die Bedingungen der Verdüsung, der Richtung der Schwerkraft, den Inertgasstrom und durch elektrostatische Kräfte sowie durch Kombinationen dieser Einflussgrößen beeinflusst werden.

Um Sprühverluste zu vermeiden, ist es bevorzugt, dass man die Inertgasabführung bzw. Inertgasabsaugung durch das vorzugsweise kontinuierlich zugeführte Fasermaterial hindurch führt, bei dem insbesondere der Feinanteil der Schmelzetropfen durch eine erzwungene Konvektion von dem Fasermaterial herausgefiltert wird; auf diese Weise können ansonsten auftretende Sprühverluste minimiert werden. Dabei fungiert das Fasermaterial praktisch als Filtermaterial. Gleichzeitiger Nebeneffekt ist, dass bei einer solchen Inertgasabsaugung über das Fasermaterial dieses weiter getrocknet wird.

Bevorzug befindet sich Fasermaterial unterhalb des Austragsorgans und wird im kontinuierlichen Betrieb mit konstanter Einzugsgeschwindigkeit in Produktionsrichtung eingetragen. Bevorzugt wird das erfindungsgemäße Verfahren kontinuierlich durchgeführt.

Bei dem erfindungsgemäßen Verfahren bildet sich die für die anionische Polymerisation erforderliche aktivierte Monomerschmelze durch das Zusammentreffen und Durchmischen der Tropfen der beiden Komponenten a1) und a2).

### b) Polymerisation

Die auf das Fasermaterial aufgetragenen Monomerschmelzen a1) und a2) werden vorzugsweise bei einer Temperatur von 120 bis 300 °C, vorzugsweise bei 120 bis 250 °C, insbesondere bei 140 bis 180 °C zur polymerisiert.

Das erfindungsgemäße Verfahren kann weiter verbessert werden, indem man nach dem Auftragen der beiden Komponenten a1) und a2) nachträglich das imprägnierte Fasermaterial mittels konstant oder alternierend (man spricht von Walken) aufgebrachten Druck, behandelt.

Dafür ist es bevorzugt, nach dem Auftragen von a1) und a2) das Fasermaterial mit umlaufenden Bändern, vorzugsweise mit Polytetrafluorethylen, abzudecken und einer kontinuierlich betriebenen beheizten Pressvorrichtung zuzuführen. Alternativ kann ein solcher Druck auch mittels sich gegen-überliegende Walzenpaaren erfolgen. Vorzugsweise beträgt der Druck 2 bis 100 bar, besonders bevorzugt 10 bis 40 bar.

Die bei der Druckanlegung anzuwendende Temperatur ist vorzugsweise größer als die Schmelztemperatur der Komponenten a1) und a2), vorzugsweise bis 140 °C, insbesondere bis 100 °C höher.

Durch Walken, bevorzugt mit Hilfe von gegenüber liegenden Walzenpaaren, werden Scher-, Öffnungs- und Schließbewegungen relativ zueinander induziert und damit eine noch intensivere Vermischung der Komponenten a1) und a2) und die Verteilung im Fasermaterial zusätzlich unter-stützt. Durch das bevorzugte simultane Austragen der Komponenten a1) und a2) und Inertgas über eine Mehrstoffdüse wird eine effiziente Inertisierung des Sprühnebels erreicht, die eine Deaktivierung der Schmelze beispielsweise durch Luftfeuchtigkeit verhindert.

Die erfindungsgemäß bevorzugt eingesetzte Dreistoffdüse ermöglicht mittlere Tropfendurchmesser von etwa 30 - 100 µm; die mittlere Masse eines Tropfens mit 70 µm entspricht damit etwa 0.2 mg, also etwa 1/1000stel der Masse einer überwiegend durch Schwerkraft betriebenen Zertropfung .

Mit dem erfindungsgemäßen Verfahren wird vorzugsweise ein Faserverbundwerkstoff mit einem Restmonomerengehalt von weniger als 3%, vorzugsweise von weniger als 2% erreicht.

Bei kontinuierlichen Anlagen sind Restmonomergehalte unter 1 Gew.-% möglich.

Das erfindungsgemäße Verfahren ist besonders gut für halbkontinuierliche oder kontinuierliche Verfahren, vorzugsweise in Doppelbandpressen oder in kontinuierlichen Formpressen geeignet. Das erfindungsgemäße Verfahren zeichnet sich durch schnelle Imprägnierung und hohe Produktivität aus und erlaubt Faserverbundwerkstoffe in hohen Raten zu erzeugen.

Das erfindungsgemäße Verfahren kann auch zur Herstellung von Faserverbundwerkstoffen mit mehrschichtigem Fasermaterial verwendet werden.

Bevorzugt ist ein solches Verfahren zur Herstellung eines Faserverbundwerkstoffes, enthaltend mehrere Lagen Fasermaterial, dadurch gekennzeichnet, dass man
i) mehrere Lagen Fasermaterial übereinander legt und die Oberfläche der obersten Lage mit den Monomerenmsichungen a1) und a2) nach Schritt a) behandelt bevor sich Schritt b) anschließt oder
ii) mehrere Lagen Fasermaterial zunächst einzeln wie in Schritt a) mit den Monomerenmischungen behandelt, diese danach, vorzugsweise unter Anlegen eines Druckes, in Kontakt bringt, bevor sich Schritt b) anschließt.

Bevorzugt ist es bei Verwendung mehrerer Lagen Fasermaterial in der anschließenden Polymerisation Druck anzulegen, um den Kontakt der Fasermateriallagen zu der sich ausbildenden Polymermatrix möglichst innig zu halten.

Weiterhin ist es möglich, die nach dem erfindungsgemäßen Verfahren erhaltenen Faserverbundwerkstoffe mit ein- oder mehrschichtigem Fasermaterial mit weiteren solcher Faserverbundwerkstoffe bei einer Temperatur im Bereich der Schmelz- bzw. Erweichungstemperatur der Polymermatrix, insbesondere 10 bis 80°C, vorzugsweise 10 bis 60 °C oberhalb der Schmelz- bzw. Erweichungstemperatur zu einem mehrschichtigen Faserverbundwerkstoff zu verpressen.

Die Erfindung betrifft daher auch ein Verfahren zur Herstellung eines ein- oder mehrschichtigen Faserverbundwerkstoffes.

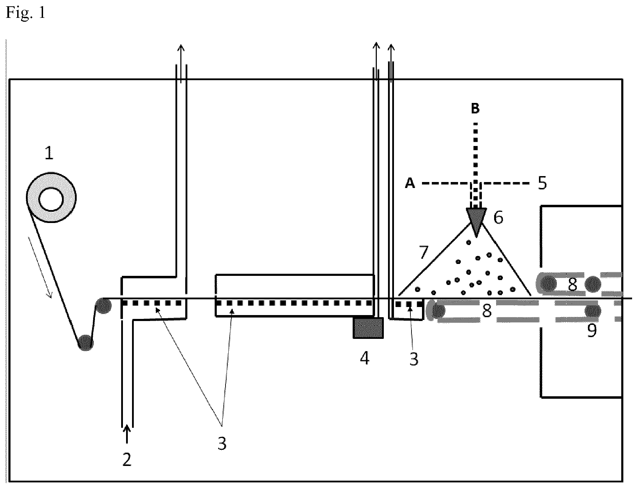

Eine bevorzugte Anordnung einer kontinuierlich betriebenen Anlage zum Betreiben des erfindungs-gemäßen Verfahrens ist in Fig. 1 dargestellt.

Elemente der Fig1.:
(1) Fasermaterial (Zuführung von einer Rolle)
(2) Heißluft zur Vortrocknung
(3) Perforierte Bleche für den Luftzutritt
(4) Trockene Heißluft im Umluftbetrieb
(5) Stickstoff vorgewärmt
(6) Dreistoffdüse
(7) Domkonstruktion (Einhausung der Sprühzone)
(8) Teflon Transportbänder
(9) Gegenüberliegende Rollen zum Komprimieren des Fasermaterials
   (A) Caprolactam mit Aktivator
   (B) Caprolactam mit Katalysator

### Beispiele:

### I. Versuche zum Einfluss des Schmelzeauftrages und der Tropfengröße:

### a1)

In einem Dreihalskolben wurden 100 g ε-Caprolactam und 6.5 g an Katalysator, Addonyl® Kat NL (Rhein Chemie Rheinau GmbH) eingewogen. Bei Addonyl Kat NL handelt es sich um eine kommerzielle Mischung von 18.5 Gew.-% Natriumcaprolactamat (CAS-Nr.: 2123-24-2) in monomerem Caprolactam.

### a2)

In zweiter Dreihalskolben wurde mit 100 g ε-Caprolactam und 3.5 g Addonyl® 8120 (ebenfalls Rhein Chemie Rheinau GmbH) befüllt. Bei Addonyl 8120 handelt es sich um ein beidseitig Caprolactam-geblocktes Hexamethylendiisocyanat, konkret um N,N'-Hexan-1,6-diylbis(hexahydro-2-oxo-1H-azepine-1-carboxamid), CAS Nr.: 5888-87-9.

Der Inhalt beider Kolben wurde in auf 135 °C vorgeheizten Ölbädern getrennt aufgeschmolzen. An-schließend wurde bei dieser Temperatur für 10 Minuten ein Vakuum angelegt. Dann wurden beide Kolben mit Stickstoff geflutet und die Ölbäder entfernt.

Die Schmelzen a1) und a2) wurden jeweils abgekühlt bis die Temperatur der Schmelzen 100 °C betrug.

Die Versuche wurden auf einer Heizplatte durchgeführt, die zur Inertisierung mit Folie eingehaust wurde und dessen Innenraum mit Stickstoff geflutet wurde. Konkret wurde der Innenraum mit getrocknetem Stickstoff gefüllt und die Heizplatte auf 160°C temperiert.

Ein Glasfasergewebe (P-D Interglas Technologies, Erbach, Typ 92152 mit einem Flächengewicht von 290 g/m²) wurde zuvor in einem Wärmeschrank bei 80°C für 12h getrocknet.

Bei den Versuchen wurde ein Faservolumenanteil des Faserverbundwerkstoffes von 40 Vol.-% an-gestrebt. Die für die Versuche eingesetzten Gewebelagen wurden zunächst gewogen damit das zur Erzielung des 40 Vol.-%-igen Faservolumenverhältnis notwendige Volumen an Schmelze berechnet.

Zur besseren Wärmeleitung wurde das getränkte Gewebe nach dem Schmelzeauftrag von oben mit einer ebenfalls auf 160°C temperierten Eisenplatte (Masse: 2.0 kg) beschwert. Um einen unmittelbaren Kontakt der Schmelze mit der Eisenplatte zu vermeiden, wurde das Glasfasergewebe nach dem Schmelzeauftrag mit einer Polyimid Folie (Kaptan®HN von DuPont) abgedeckt.

Die Polymerisationsdauer betrug in allen Fällen fünf Minuten.

### Vergleichsbeispiel 1

Die beiden vorbereiteten Caprolactamschmelzen a1) und a2) wurden vereinigt und vermischt, dann die berechnete Menge zur Erzielung eines 40 Vol.-%igen Faservolumengehaltes mit einer vorgewärmten PE-Pipette aufgetragen.

Nach der Polymerisation hatte die PA 6 Matrix einen Restmonomergehalt von 1,9 Gew.-%.

### Vergleichsbeispiel 2

Die beiden vorbereiteten Caprolactamschmelzen a1) und a2) wurden nicht vereinigt, sondern separat zu gleichen Volumina mit Hilfe zweier vorgewärmter PE-Pipetten auf das Glasfasergewebe aufgetragen. Das Auftropfen der beiden Schmelzen erfolgte dabei gleichzeitig und die Tropfen wurden in unmittelbarer Nähe der jeweils anderen Komponente aufgetropft um eine möglichst gute Vermischung zu erzielen.

Die Masse eines unter Schwerkraft gebildeten Einzeltropfens betrug dabei im Mittel 20 mg.

Nach der Polymerisation hatte die PA 6 Matrix einen Restmonomergehalt von etwa 80 Gew.-%, bestand folglich zum überwiegenden Anteil aus nicht-umgesetztem Monomer, welches sich mit warmem Wasser aus der Verbundplatte herauswaschen ließ.

### Vergleichsbeispiel 3

Es wurde wie im Vergleichsbeispiel 2 vorgegangen, das Gewebe wurde aber nach dem Auftrag der beiden Schmelzen a1) und a2) mit einer Polyimid-Folie abgedeckt und mit einer einfachen Rolle für fünf Sekunden gerollt, damit "gewalkt".

Nach der Polymerisation hatte die PA 6 Matrix einen Restmonomergehalt von etwa 50 Gew.-%, bestand folglich immer noch zum überwiegenden Anteil aus nicht-umgesetztem Monomer.

### Beispiel 1 (erfindungsgemäß)

In diesem Fall wurden gleiche Volumenströme der beiden Schmelzen über eine Dreistoffdüse der Firma Schlick, Modell 946 S1, aufgetragen. Zur Vermeidung einer Erstarrung der Caprolactam-schmelzen wurde die Düse zuvor auf 120°C im Wärmeschrank temperiert, die Dosierung der gleichen Volumenströme erfolgte über zwei vorgewärmte PE-Spritzen, die Zerstäubung erfolgte durch einen Stickstoffstrom (30 Gew.-% Stickstoff, bezogen auf die insgesamt dosierte Schmelzemenge.)

Auf diese Weise können Tropfendurchmesser < 100 µm erzielt werden. Die mittlere Tropfenmasse entsprach damit etwa 1/1000stel der unter der von Vergleichsbeispiel 2 beschriebenen Variante.

Nach der Polymerisation hatte die PA 6 Matrix einen Restmonomergehalt von nur noch 2,5 Gew.-%. Außerdem war keine Ablagerung von Polymer erkennbar.

## Patentansprüche

1. Verfahren zur Herstellung eines Faserverbundwerkstoffes, wobei man:
a) auf die Oberfläche eines Fasermaterials
a1) eine bei der Auftragungstemperatur flüssige Monomerenmischung, enthaltend ein zyklisches Amid und einen Aktivator und
a2) eine bei der Auftragungstemperatur flüssige Monomerenmischung, enthaltend ein zyklisches Amid und einen Katalysator
mit einer Temperatur oberhalb der Schmelztemperatur der jeweiligen Monomermischung a1) bzw. a2), aufträgt und
b) das nach a) beaufschlagte Monomerengemisch bei einer Temperatur von 120 bis 300 °C polymerisiert,
**dadurch gekennzeichnet, dass** die mittlere Tropfengröße der jeweiligen Monomermischungen a1) und a2) kleiner 500 µm, insbesondere kleiner 200 µm, insbesondere von 10 bis 100 µm betragen, und mittels Laserbeugungsspektrometern gemessen wird, und das zyklische Amid Lauryllactam, Caprolactam oder deren Mischung entspricht, der Aktivator wenigstens eine Verbindung ausgewählt aus der Gruppe der Isocyanate, Uretdione, Carbodiimide, Säureanhydride oder Säurehalogenide oder deren Umsetzungsprodukte mit dem Monomer ist,
als Katalyssator wenigstens eine Verbindung ausgewählt aus der Gruppe bestehend aus Natriumcaprolactamat, Kaliumcaprolactamat, Bromid-Magnesiumcaprolactamat, Chlorid-Magnesium-caprolactamat, Magnesium-bis-Caprolactamat, Natriumhydrid, Natrium, Natriumhydroxid, Natriummethanolat, Natriumethanolat, Natriumpropanolat, Natriumbutanolat, Kaliumhydrid, Kaliumhydroxid, Kaliummethanolat, Kaliumethanolat, Kaliumpropanolat und Kalium-butanolat, bevorzugt aus der Gruppe bestehend aus Natriumhydrid, Natrium und Natriumcaprolactamat, eingesetzt wird, und die Auftragung mittels einer Dreistoffdüse erfolgt

2. Verfahren gemäß Anspruch 1, **dadurch gekennzeichnet, dass** als Katalysator Natriumcaprolactamat eingesetzt wird.

3. Verfahren zur Herstellung eines Faserverbundwerkstoffes gemäß wenigstens einem der Ansprüche 1 oder 2, **dadurch gekennzeichnet, dass** das Fasermaterial ausgewählt wird aus der Gruppe der Gewebe, Gelege einschließlich Multiaxialgelege, Gesticke, Geflechte, Vliese, Filze, und Matten.

4. Verfahren zur Herstellung eines Faserverbundwerkstoffes gemäß wenigstens einem der Ansprüche 1 bis 3, enthaltend mehrere Lagen Fasermaterial, **dadurch gekennzeichnet, dass** man
i) mehrere Lagen Fasermaterial übereinander legt und die Oberfläche der obersten Lage mit den Monomerenmsichungen a1) und a2) nach Schritt a) behandelt bevor sich Schritt b) anschließt oder
ii) mehrere Lagen Fasermaterial zunächst einzeln wie in Schritt a) mit den Monomerenmischungen behandelt und diese danach in Kontakt bringt, bevor sich Schritt b) anschließt.

## Claims

1. Process for the production of a fibre composite material, where:
a) the following are applied to the surface of a fibre material:
a1) a monomer mixture that is liquid at the application temperature, comprising a cyclic amide and an activator, and
a2) a monomer mixture that is liquid at the application temperature, comprising a cyclic amide and a catalyst
at a temperature above the melting point of the respective monomer mixture a1) and, respectively, a2) and
b) the monomer mixture of a) is polymerized at a temperature of from 120 to 300°C,
**characterized in that** the average droplet size of the respective monomer mixtures a1) and a2) is below 500 µm, in particular below 200 µm, in particular from 10 to 100 µm, and is measured by laser diffraction spectrometers,
and the cyclic amide is laurolactam, caprolactam or a mixture of these,
the activator is at least one compound selected from the group of the isocyanates, uretdiones, carbodiimides, anhydrides and acyl halides and reaction products of these with the monomer,
catalyst used comprises a compound selected from the group consisting of sodium caprolactamate, potassium caprolactamate, magnesium bromide caprolactamate, magnesium chloride caprolactamate, magnesium bis-caprolactamate, sodium hydride, sodium, sodium hydroxide, sodium methanolate, sodium ethanolate, sodium propanolate, sodium butanolate, potassium hydride, potassium hydroxide, potassium methanolate, potassium ethanolate, potassium propanolate and potassium butanolate, preferably from the group consisting of sodium hydride, sodium and sodium caprolactamate, and the application is achieved by means of a three-fluid nozzle.

2. Process according to Claim 1, **characterized in that** catalyst used comprises sodium caprolactamate.

3. Process for the production of a fibre composite material according to at least one of Claims 1 and 2, **characterized in that** the fibre material is selected from the group of the woven fabrics, laid scrims inclusive of multiaxial laid scrims, knitted fabrics, braided fabrics, nonwoven fabrics, felts and mats.

4. Process for the production of a fibre composite material according to at least one of Claims 1 to 3, comprising a plurality of plies of fibre material, **characterized in that**
i) a plurality of plies of fibre material are mutually superposed and the surface of the uppermost ply is treated according to step a) with the monomer mixtures a1) and a2) before step b) follows or
ii) a plurality of plies of fibre material are first individually treated as in step a) with the monomer mixtures and these are then brought into contact before step b) follows.

## Revendications

1. Procédé de fabrication d'un matériau composite fibreux, dans lequel :
a) sur la surface d'un matériau fibreux,
a1) un mélange de monomère liquide à la température d'application, contenant un amide cyclique et un activateur, et
a2) un mélange de monomère liquide à la température d'application, contenant un amide cyclique et un catalyseur,
sont appliqués à une température supérieure à la température de fusion du mélange de monomère a1) ou a2) respectif, et
b) le mélange de monomère chargé selon a) est polymérisé à une température de 120 à 300 °C, **caractérisé en ce que** la taille de goutte moyenne des mélanges de monomère a1) et a2) respectifs est inférieure à 500 µm, notamment inférieure à 200 µm, notamment de 10 à 100 µm, et est mesurée au moyen de spectromètres à diffraction laser,
et l'amide cyclique correspond au lauryllactame, au caprolactame ou leur mélange,
l'activateur est au moins un composé choisi dans le groupe constitué par les isocyanates, les uretdiones, les carbodiimides, les anhydrides d'acides ou les halogénures d'acides ou leurs produits de réaction avec le monomère,
en tant que catalyseur, au moins un composé choisi dans le groupe constitué par le caprolactamate de sodium, le caprolactamate de potassium, le caprolactamate de bromure de magnésium, le caprolactamate de chlorure de magnésium, le bis-caprolactamate de magnésium, l'hydrure de sodium, le sodium, l'hydroxyde de sodium, le méthanolate de sodium, l'éthanolate de sodium, le propanolate de sodium, le butanolate de sodium, l'hydrure de potassium, l'hydroxyde de potassium, le méthanolate de potassium, l'éthanolate de potassium, le propanolate de potassium et le butanolate de potassium, de préférence dans le groupe constitué par l'hydrure de sodium, le sodium et le caprolactamate de sodium, est utilisé, et l'application a lieu au moyen d'une buse à trois substances.

2. Procédé selon la revendication 1, **caractérisé en ce que** du caprolactamate de sodium est utilisé en tant que catalyseur.

3. Procédé de fabrication d'un matériau composite fibreux selon au moins l'une quelconque des revendications 1 ou 2, **caractérisé en ce que** le matériau fibreux est choisi dans le groupe des tissus, des nappes, y compris des nappes multiaxiales, des tricots, des treillis, des non-tissés, des feutres et des mats.

4. Procédé de fabrication d'un matériau composite fibreux selon au moins l'une quelconque des revendications 1 à 3, contenant plusieurs couches de matériau fibreux, **caractérisé en ce que**
i) plusieurs couches de matériau fibreux sont superposées et la surface de la couche la plus supérieure est traitée avec les mélanges de monomère a1) et a2) selon l'étape a) avant que l'étape b) ne s'ensuive, ou
ii) plusieurs couches de matériau fibreux sont tout d'abord traitées individuellement tel que dans l'étape a) avec les mélanges de monomère, et celles-ci sont ensuite mises en contact, avant que l'étape b) ne s'ensuive.
